Europäisches Patentamt

European Patent Office

Office européen des brevets

(19)

(11) Publication number: **0 687 412 A1**

## EUROPEAN PATENT APPLICATION
## published in accordance with Art. 158(3) EPC

(12)

(21) Application number: **95904028.8**

(22) Date of filing: **28.12.94**

(86) International application number:
**PCT/JP94/02299**

(87) International publication number:
**WO 95/17819 (06.07.95 95/29)**

(51) Int. Cl.⁶: **A01N 47/48**

(30) Priority: **28.12.93 JP 337211/93**

(43) Date of publication of application:
**20.12.95 Bulletin 95/51**

(84) Designated Contracting States:
**AT BE CH DE DK ES FR GB GR IE IT LI LU MC NL PT SE**

(71) Applicant: **RENGO CO., LTD.**
**1-186, Ohiraki 4-chome,**
**Fukushima-ku**
**Osaka-shi,**
**Osaka-fu 553 (JP)**
Applicant: **THE GREEN CROSS CORPORATION**
**3-3, Imabashi 1-chome**
**Chuo-ku**
**Osaka-shi**
**Osaka 541 (JP)**

(72) Inventor: **FUJITA, Masao Rengo Co., Ltd.**
**Fukui Research Laboratory**
**1-8-10, Jiyugaoka**
**Kanazu-cho**
**Sakai-gun**
**Fukui 919-06 (JP)**
Inventor: **KAMEI, Kiyoshi Rengo Co., Ltd.**
**Fukui Research Laboratory**
**1-8-10, Jiyugaoka**
**Kanazu-cho**
**Sakai-gun**
**Fukui 919-06 (JP)**
Inventor: **KAWAZU, Kiyoko Rengo Co., Ltd.**
**Fukui Research Laboratory**
**1-8-10, Jiyugaoka**
**Kanazu-cho**
**Sakai-gun**
**Fukui 919-06 (JP)**

Inventor: **HIROHAMA, Shuji Rengo Co., Ltd.**
**Fukui Research Laboratory**
**1-8-10, Jiyugaoka**
**Kanazu-cho**
**Sakai-gun**
**Fukui 919-06 (JP)**
Inventor: **MIZUKAMI, Yuichi The Green Cross Corporation**
**Joto Office**
**1-47, Chuo 1-chome**
**Joto-ku**
**Osaka-shi**
**Osaka 536 (JP)**
Inventor: **SEKIYAMA, Yasushi The Green Cross Corporation**
**Joto Office**
**1-47, Chuo 1-chome**
**Joto-ku**
**Osaka-shi**
**Osaka 536 (JP)**
Inventor: **TAKATA, Asami The Green Cross Corporation Joto Office**
**1-47, Chuo 1-chome**
**Joto-ku**
**Osaka-shi**
**Osaka 536 (JP)**
Inventor: **NUMATA, Shoko 2-13-5,**
**Momogaike-cho**
**Abeno-ku**
**Osaka-shi**
**Osaka 549 (JP)**

(74) Representative: **VOSSIUS & PARTNER**
**Postfach 86 07 67**
**D-81634 München (DE)**

EP 0 687 412 A1

Rank Xerox (UK) Business Services
(3.10/3.09/3.3.4)

(54) **CONTROLLED-RELEASE AIT PREPARATION, PROCESS FOR PRODUCING THE SAME, AND USE THEREOF**

(57) A controlled-release AIT (allyl isothiocyanate) preparation comprising AIT and shellac serving as a barrier against AIT release; the above preparation comprising a shellac containing AIT incorporated therein (an AIT-incorporating shellac); the above preparation wherein the AIT-incorporating shellac is in the form of plate, block or granule; the above preparation wherein the AIT-incorporating shellac has been adhered onto or mixed into a base material; the above preparation wherein the base material is one selected from among plastic plate, paper, non-woven fabric and woven fabric; and the above preparation wherein the AIT of the AIT-incorporating shellac is supported on a carrier. The AIT vapor release rate can be varied by appropriately selecting the chemical composition, preparation process and so forth of the AIT-incorporating shellac. Sustained release of AIT vapor for long is also possible. As the AIT-incorporating shellac can be easily worked into various forms, the AIT preparation can be provided in various forms. It is useful in various fields of food, packaging material, construction material and so forth as a functional material which is highly stable and has antimicrobial, antimold, freshness-retaining and insectproof properties.

Technical Field

The present invention relates to an AIT controlled-release preparation capable of easy control of the release of ally] isothiocyanate (hereinafter referred to as AIT) vapor, which enables sustained release thereof, namely, an AIT controlled-release preparation comprising AIT and shellac acting as a barrier against AIT release, production thereof and use thereof.

Prior Art

AIT, which is an ingredient of *wasabi*, has a superior antimicrobial action such as biocidal action, antibacterial action and antifungal action, and shows no harmful effects on human beings. Accordingly, its usefulness as a biocidal agent for foodstuffs and the like has been drawing attention.

AIT itself has a peculiar, strong and sharp smell, and is disadvantageous in that the strong sharp smell adheres to food and the like when used at a high concentration. It is therefore required to effectively exhibit the antimicrobial action in a least possible amount. Fortunately, AIT vapor from the highly volatile AIT, too, has a strong antimicrobial effect, which allows effective exertion of the antimicrobial action with only a small amount of the vapor.

Due to the extremely high volatility of AIT, however, the use thereof as it is results in high AIT vapor concentration reached in a short time in the atmospheric gas with which the objects to be treated with the antimicrobial agent are brought into contact, which in turn may lead to disadvantageous results that the retention of the effects becomes inferior, the smell attaches to the objects to be treated, and adverse influences are caused by the infiltration of the AIT vapor into the objects to be treated.

For the AIT to be effectively used as an antimicrobial agent, the development of a preparation is desired which enables free control of the release speed of the AIT vapor and free control of the AIT vapor concentration in the atmospheric gas with which the objects to be treated with the antimicrobial agent are brought into contact, according to the objects to be treated and treatment method. In particular, the development of an agent capable of keeping the AIT concentration in the atmospheric gas at a desired level for a long time is also desired.

The antimicrobial agent satisfying such demand preferably has a form easily handled in the system in which the agent is to be used, and easily processed. From such viewpoints, there have been conventionally proposed an agent wherein the release speed of AIT vapor is controlled by carrying AIT on a carrier, an agent wherein AIT is packaged with a film having good AIT vapor permeability, an agent wherein AIT is included in cyclodextrin (hereinafter referred to as CD) and processed into powder or granule to suppress volatility, an agent wherein such powdery substance is kneaded with a resin and processed into a film, an agent wherein such powdery substance is incorporated in paper or nonwoven fabric or coated thereon, an agent wherein AIT is prepared into powder or granule by microcapsuling same by core solvation method, spray drying or various methods to suppress volatility, and an agent wherein AIT is kneaded with a thermoplastic synthetic resin and processed into a film or sheet.

However, an agent wherein AIT is merely carried on a carrier not only fails to sufficiently suppress the high volatility of AIT but is associated with difficulty in processing into other forms. In the case of an AIT vapor permeable film, control of the release speed is limited, since the release speed of the AIT vapor is controlled by the thickness of the film. Moreover, the applicable system is also limited. An inclusion compound of CD is problematic in that CD itself is expensive, AIT vapor cannot be released when the system does not have a humidity over a certain level, and, too high a humidity results in weak AIT inclusion by CD and rapid release of AIT, thus failing to control the release speed of AIT vapor.

Microcapsuling of AIT is not suitable for industrial production due to the extremely poor AIT yield in the production process and difficulty in producing in large amounts. In addition, AIT vapor is not released until an outer force is applied to rupture the microcapsules, thus making control of the AIT vapor release speed unattainable.

Also, kneading AIT with a thermoplastic synthetic resin is not suitable for industrial production like microcapsuling, due to the extremely poor yield of AIT. A sheet or film of a synthetic resin kneaded with AIT is either swollen or becomes swollen with time, since AIT invades many synthetic resins, and is not suitable as a practical material. A synthetic resin which is not invaded by AIT is impervious to AIT vapor, and scarcely releases AIT vapor even if AIT is kneaded therewith.

As described above, a practical AIT controlled-release preparation capable of free control of the AIT vapor release speed and applicable to various systems has not heretofore existed.

Disclosure of the Invention

In view of the above-mentioned problems, the present inventors have done intensive studies and found that the release of AIT vapor can be easily controlled by using shellac which can act as a barrier against AIT release, in particular, by incorporating AIT in shellac, and confirmed that a preparation comprising them can be easily and economically prepared, as well as easily prepared into various forms, which resulted in the completion of the present invention.

Accordingly, the present invention provides AIT controlled-release preparations comprising AIT and shellac acting as a barrier against the release of AIT, and AIT controlled-release preparations having a characteristic noted below.

(1) An AIT controlled-release preparation comprising a shellac incorporating AIT

(2) An AIT controlled-release preparation comprising a shellac in a proportion of 1 to 1,000 parts by weight per part by weight of AIT

(3) An AIT controlled-release preparation formed by a process comprising mixing AIT with a shellac melted at a temperature of not more than 100°C

(4) An AIT controlled-release preparation wherein a shellac incorporating AIT is in the form of a plate, block, granule or powder

(5) An AIT controlled-release preparation comprising a shellac incorporating AIT, the shellac being adhered to a base material such as plastic plates inclusive of film and sheet, paper, nonwoven fabric and woven fabric

(6) An AIT controlled-release preparation comprising a shellac incorporating AIT, the shellac being mixed with a base material such as plastic plates inclusive of film and sheet, paper, nonwoven fabric and woven fabric

(7) An AIT controlled-release preparation comprising a shellac incorporating AIT, the AIT being carried by a carrier

The present invention also provides use of the above-mentioned AIT controlled-release preparation as an antimicrobial agent, an insectproof agent or an antiseptic, a freshness-retaining agent or a preservative for foodstuffs, as well as a production method of the AIT controlled-release preparation of the present invention.

Brief Description of the Drawings

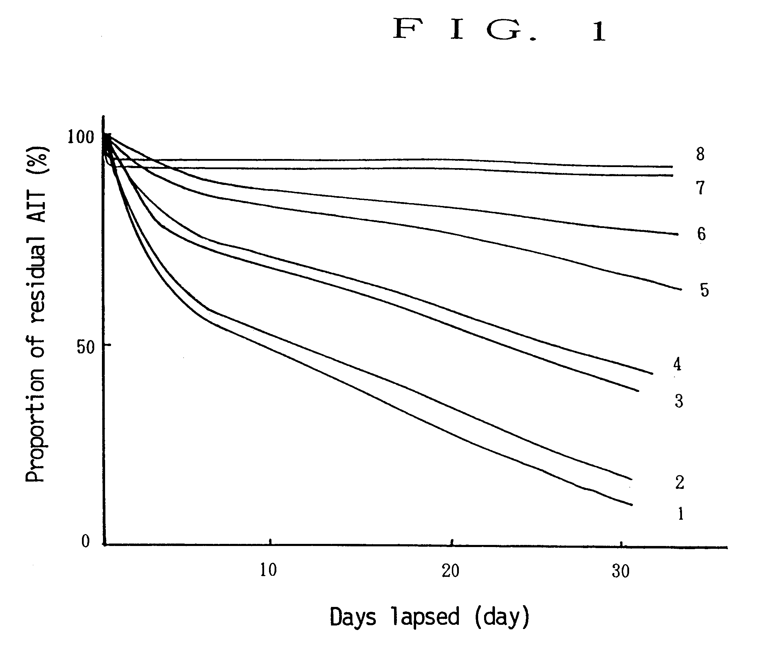

Fig. 1 is a graph showing time-course residual ratios of AIT in the AIT controlled-release preparation prepared in Examples 1, 2, 5, 6, 9 and 10, and the AIT-containing preparations prepared in Comparative Examples 1 and 2, wherein the symbols 1 to 8 mean the following:

1. time-course changes of residual AIT ratio in the AIT controlled-release preparation prepared in Example 5,

2. time-course changes of residual AIT ratio in the AIT controlled-release preparation prepared in Example 1,

3. time-course changes of residual AIT ratio in the AIT controlled-release preparation prepared in Example 6,

4. time-course changes of residual AIT ratio in the AIT controlled-release preparation prepared in Example 2,

5. time-course changes of residual AIT ratio in the AIT controlled-release preparation prepared in Example 9,

6. time-course changes of residual AIT ratio in the AIT controlled-release preparation prepared in Example 10,

7. time-course changes of residual AIT ratio in the AIT-containing preparation prepared in Comparative Example 1, and

8. time-course changes of residual AIT ratio in the AIT-containing preparation prepared in Comparative Example 2.

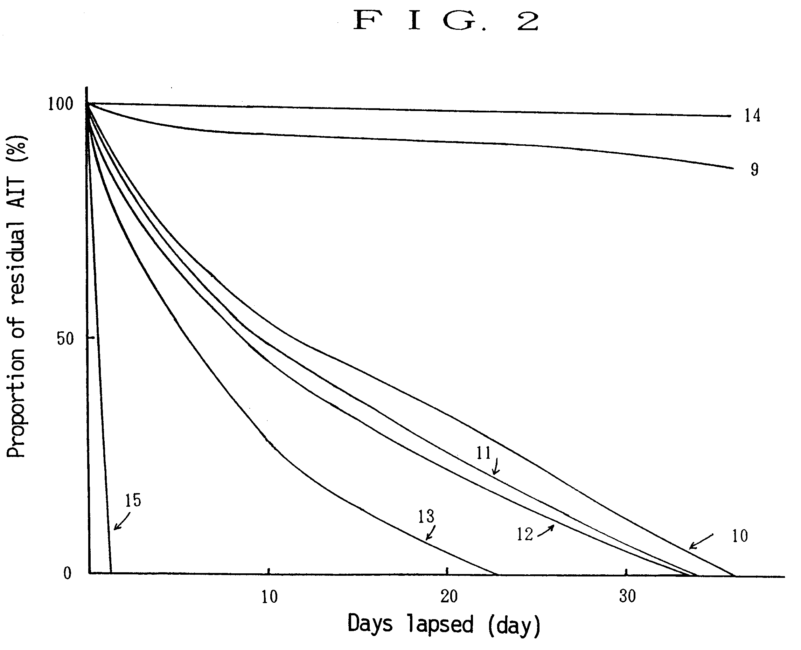

Fig. 2 is a graph showing time-course residual ratios of AIT in the AIT controlled-release preparations prepared in Examples 2, 6, 10, 13 and 18, and the AIT-containing preparations prepared in Comparative Examples 3 and 5, wherein the symbols 9 to 15 mean the following:

9. time-course changes of residual AIT ratio in the AIT controlled-release preparation prepared in Example 18,

10. time-course changes of residual AIT ratio in the AIT controlled-release preparation prepared in Example 2,

11. time-course changes of residual AIT ratio in the AIT controlled-release preparation prepared in Example 13,

12. time-course changes of residual AIT ratio in the AIT controlled-release preparation prepared in Example 6,

13. time-course changes of residual AIT ratio in the AIT controlled-release preparation prepared in Example 10,

14. time-course changes of residual AIT ratio in the AIT-containing preparation prepared in Comparative Example 3, and

15. time-course changes of residual AIT ratio in the AIT-containing preparation prepared in Comparative Example 4.


Detailed Description of the Invention

The AIT controlled-release preparation, production method therefor and use thereof of the present invention are described in the following.

The shellac to be used in the present invention is a resin-like substance secreted by rack scale insects which parasitize on certain legumes and mulberries. The resin-like substance is generally bleached, purified and put to use. Although the chemical composition thereof has not been elucidated, the main component is considered to be a naturally condensed product wherein oxycarboxylic acids in the form of lactones are bound to each other.

The shellac can be used as it is, or it can be added with various additives conventionally used, such as plasticizer, coloring, close adhesion preventive and adhesion preventive, to the extent that the object of the present invention is not impaired.

The AIT to be used in the present invention may be either natural or synthetic. It is not limited to an agent consisting of 100% AIT, but may be a composition containing AIT. When it is used for foodstuffs, however, a naturally occurring AIT is preferable. There is no limitation imposed on the synthesis method of AIT.

The AIT controlled-release preparation of the present invention is characterized in that it comprises AIT and shellac, the shellac being added to be a barrier against the release of AIT, specifically that it comprises a shellac which has incorporated AIT (hereinafter also referred to as "AIT-incorporating shellac"). The state of AIT being incorporated in a shellac means the state wherein the entirety or a part, preferably the entirety, of AIT is covered by the shellac. In such AIT-incorporating shellac, AIT is present in the shellac in the state wherein the inherent volatility of AIT is suppressed. By the release of the incorporated AIT through shellac, or by the passage of AIT vapor through fine pores formed in the shellac, the release speed of AIT vapor is controlled.

The mixing ratio of AIT and shellac in the AIT-incorporating shellac in the AIT controlled-release preparation of the present invention plays an important role in controlling the release speed of AIT vapor. By changing the mixing ratio as appropriate, the release speed of AIT vapor from the AIT controlled-release preparation of the present invention can be controlled to a desired one according to the object and use. When compared between two AIT-incorporating shellacs both having the same AIT amount and the same AIT release surface area, in general, a greater mixing ratio of AIT relative to shellac results in a higher AIT vapor release speed. This is considered to be attributable to the fact that AIT permeability increases with increasing mixing ratio of AIT, since structural density that the shellac inherently possesses is impaired thereby, and that the difference between the AIT concentration in the AIT-incorporating shellac and that in the outside becomes greater to cause an increase in the amount of AIT vapor released.

The mixing proportion of the shellac and AIT in the AIT-incorporating shellac moiety in the AIT controlled-release preparation of the present invention is preferably 1-1,000 parts by weight of shellac relative to part by weight of AIT. When the amount of the shellac is greater than 1,000 parts by weight relative to part by weight of AIT, the release speed of AIT vapor becomes extremely low, and when the amount of the shellac is smaller than 1 part by weight, the release speed of AIT vapor becomes extremely high to cause poor sustained release property and softening of AIT-incorporating shellac.

This mixing proportion is appropriately selected according to the use of the AIT controlled-release preparation. For example, when the AIT controlled-release preparation is used for antibacterial action in cold storage compartment of a refrigerator or freshness retention of fresh foods, the amount of AIT to be released needs only be a trace amount, and the shellac is preferably used in a proportion of 100-1,000 parts by weight per part by weight of AIT. When it is used for insectproof or antimold action in a wardrobe, or used in the form of an insectproof sheet or filter, the shellac is preferably added in a proportion of 1-50 parts by weight per part by weight of AIT.

5

In the AIT-incorporating shellac, the shellac is in a solid state at ordinary temperature and AIT is incorporated therein. The form of the AIT to be incorporated in the shellac is not particularly limited, and can be, for example, liquid (oil), or powder or granules wherein AIT is carried by a carrier.

The carrier to be used here can be any insofar as it can carry AIT and does not react with AIT, and is exemplified by inert carriers conventionally used, such as pulp, paper, cellulose particles, zeolite, alumina, silica gel and calcium silicate.

The AIT controlled-release preparation of the present invention is not particularly limited in terms of form. Preferred are the following preparation forms.

① A preparation consisting of an AIT-incorporating shellac itself in the form of, for example, sheet inclusive of film and plate, block, granule or powder

② A preparation comprising an AIT-incorporating shellac which adheres to a base material such as plastic plate inclusive of film and sheet, paper, nonwoven fabric and woven fabric

③ A preparation comprising an AIT-incorporating shellac, particularly an AIT-incorporating shellac in the form of powder or granule, which is mixed with a base material such as plastic plate inclusive of film and sheet, paper, nonwoven fabric and woven fabric

④ A preparation of the above ① to ③ wherein AIT is carried by a carrier

The preparations exemplified above are explained now.

(a) Preparation of ①

The preparation, i.e. AIT-incorporating shellac, is prepared, for example, by mixing AIT with shellac dissolved in an organic solvent and subsequently removing the organic solvent from the dissolution mixture by evaporation and the like (desolventing) to solidify and form the shellac (hereinafter referred to as solvent method), or by mixing AIT with shellac melted by heating, and subsequently cool-solidifying and forming the molten mixture (hereinafter referred to as molten method). The form of the AIT to be mixed here is not particularly limited, and can be liquid (e.g. oil), powder or granule wherein AIT is carried by a carrier, or AIT-containing composition.

(i) Solvent method

The solvent method comprises dissolving shellac in an organic solvent. Examples of the organic solvent to be used here generally include alcohol, preferably ethanol.

The concentration of the shellac to be dissolved in an organic solvent is appropriately determined according to the desired release speed of AIT vapor from the preparation. In general, smaller amounts of organic solvent to be used for the dissolution result in a shellac moiety having a small number of fine pores. Accordingly, the shellac desirably has relatively high concentration to achieve an enhanced sustained release property.

In general terms, when the shellac concentration in an organic solvent is less than 30% by weight, the yield of AIT becomes small and the release speed of AIT vapor from the AIT-incorporating shellac tends to become extremely high. Hence, it is preferable that the shellac is contained at a concentration as high as possible to the extent that workability is not impaired. On the other hand, when the concentration of the shellac exceeds 60% by weight, viscosity becomes high and the shellac tends to cause difficulty in treatments. The preferable concentration of the shellac to be dissolved in an organic solvent is 30-60% by weight, more preferably 40-60% by weight. In this concentration range, changes in the concentration exert less influences on the release speed of AIT vapor from the AIT-incorporating shellac.

Then, AIT in the state of a liquid or carried by a carrier is added and mixed with the shellac solution. The mixing ratio of the AIT and shellac (weight proportion, hereinafter referred to as charged AIT/shellac proportion) is appropriately determined in consideration of the mixing ratio of shellac and AIT in an AIT-incorporating shellac, which corresponds to the desired AIT vapor release speed, the yield of AIT in the process and the like. The proportion of the AIT is generally 0.2-200%, preferably 3-80% (shellac being 0.5-500 parts by weight, preferably 1.25-33.4 parts by weight when converted to the amount per part by weight of AIT). For an enhanced sustained release, a lower proportion of AIT is preferable. In general, when the charged AIT/shellac proportion is less than 3%, the release speed of AIT vapor becomes low, and when it exceeds 80%, the AIT-incorporating shellac produced tends to become soft. Such tendency becomes more prominent as the proportion becomes less than 0.2% or greater than 200%.

The organic solvent is removed from the obtained mixed solution by hot air drying and drying in vacuo.

(ii) Molten method

The molten method is characterized by mixing AIT with a shellac melted by heating. To be specific, shellac is melted at a temperature of not more than 100°C, preferably 70-100°C and more preferably 80-90°C, AIT is cast therein in the form of a liquid or in the form of being carried by a carrier, and the mixture is solidified by cooling to prepare an AIT-incorporating shellac.

When the melting temperature is higher than 100°C, the yield of AIT becomes poor, the release speed of AIT vapor from the obtained AIT-incorporating shellac becomes higher and the surface tends to be poor with pockmarks. The solidification by cooling is preferably done as quickly as possible, since quick solidification by cooling makes the yield of AIT greater.

The charged AIT/shellac proportion when producing a preparation is generally 0.125-125%, preferably 3-100% (shellac being 0.8-800 parts by weight, preferably 1-33.4 parts by weight when converted to the amount per part by weight of AIT). The proportion is appropriately determined in consideration of the yield of AIT and the mixing ratio of shellac and AIT in the final product of an AIT controlled-release preparation, which corresponds to the desired AIT vapor release speed.

According to the solvent method, the residual solvent is less, since high concentration shellac is dissolved in an alcohol, and the yield of AIT is high. On the other hand, the molten method is advantageous in that a residual solvent does not exist due to the absence of a solvent, and the yield of AIT is high, since a process for evaporating the solvent is not necessary. Generally speaking, when the AIT amount and AIT release surface area are the same, the solvent method tends to form an AIT-incorporating shellac having higher AIT vapor release speed than does the molten method. This is considered to be due to the greater number of fine pores formed by the evaporation of the solvent according to the solvent method. Both methods facilitate processing into various forms and the method is appropriately selected according to the object and purpose of use of the AIT controlled-release preparation. Preferred is the molten method producing no residual solvent.

A powdery or granular preparation can be prepared by, for example, pulverizing an AIT-incorporating shellac formed into a plate or block, or by discharging the composition of shellac dissolved in an organic solvent or melted by heating and liquid AIT from a nozzle. Alternatively, the preparation can be formed by coating a powdery or granular substance carrying AIT with a liquid shellac prepared by dissolving shellac in an organic solvent or melting same by heating.

(b) Preparation of ②

In said preparation, the state wherein an AIT-incorporating shellac is adhered to a base material embraces not only the state wherein an AIT-incorporating shellac layer is formed on the surface of the base material, but also the state wherein an AIT-incorporating shellac layer is formed in the base material.

Such preparation can be formed by coating a mixture of shellac dissolved in an organic solvent according to the aforementioned solvent method, and AIT, or a molten mixture of shellac melted by heating and AIT as in the molten method, on the surface of the base material, or by immersing the base material in said mixture to impregnate the base material with said mixture in the voids in the material. In particular, the coating type procedure is preferable in that small lot production is possible and the preparations having stable quality can be produced.

The base material is subject to no particular limitation as long as it can adhere an AIT-incorporating shellac, and is exemplified by plastic plate inclusive of film and sheet, paper, nonwoven fabric and woven fabric.

Examples of the plastic plate (plastic film or sheet) include cellophane, polyolefin (e.g. polyethylene and polypropylene), polyester, nylon and vinyl chloride. The thickness of the plastic plate is not particularly limited and is generally from 12 $\mu$m to 500 $\mu$m.

As the paper, usable are generally used products such as paper made in the Western way and cardboard.

The fiber material constituting the nonwoven fabric is not particularly limited, and is exemplified by rayon, polypropylene, polyester, wood, wood pulp and hemp fibers. The woven fabric is not particularly limited and a known woven fabric can be used.

The AIT-incorporating shellac has high affinity for the base materials as mentioned above (i.e. highly adhesive) and is advantageous in that it can form a thin and uniform film on the base materials and allows less release of the coating after application. The form of the AIT to be added to the AIT-incorporating shellac is not particularly limited and is exemplified by liquid (e.g. oil), powdery or granular substances wherein AIT is carried by a carrier and AIT-containing composition.

(c) Preparation of ③

The preparation wherein an AIT-incorporating shellac is mixed with a base material in the form of a plastic film or sheet can be produced by kneading a powdery or granular AIT-incorporating shellac prepared by the aforementioned solvent method or the molten method with a starting material resin of the base material, and forming the mixture into a plastic plate inclusive of film and sheet. The AIT can be a shellac-coated AIT carried by a carrier.

The preparation wherein an AIT-incorporating shellac is mixed with a base material such as paper, nonwoven fabric and woven fabric is exemplified by those wherein the above-mentioned powdery or granular AIT-incorporating shellac is kneaded with the fibers constituting paper, nonwoven fabric and woven fabric. Such preparation can be prepared by kneading a powdery or granular AIT-incorporating shellac with the fibers constituting paper, nonwoven fabric or woven fabric, or an adhesive in advance, and forming paper, nonwoven fabric and the like using said fibers.

According to the AIT controlled-release preparation of the present invention, the release speed of AIT vapor can be controlled, and antimicrobial action, freshness-retaining action, insectproof action and the like can be exerted in a sustained manner for a long time according to its controlling mode.

The speed of the AIT vapor released from the AIT controlled-release preparation of the present invention varies depending on the AIT permeation property of the shellac moiety of the AIT-incorporating shellac, the diameter and the number of the fine pores formed in said shellac moiety, and the like, and these properties can be controlled by the forming method and forming conditions of the AIT-incorporating shellac. Accordingly, various modes of AIT controlled-release preparations having various AIT vapor release speeds can be formed by adjusting the forming method, forming conditions and AIT contents of the AIT-incorporating shellac.

The forming conditions of the AIT-incorporating shellac which can be the factor in adjusting AIT permeation property and the like include, for example, concentration of the shellac to be dissolved, drying temperature and time, and the like for the solvent method; melting temperature, cooling temperature and time thereof for the molten method; and charged AIT/shellac proportion when forming an AIT-incorporating shellac, and the like for the both methods. In general, higher drying temperatures and melting temperatures in forming an AIT-incorporating shellac tend to result in greater effective diameters of the fine pores to be formed and higher release speeds of AIT vapor. Moreover, lower drying temperatures and longer time consumed therefor tend to result in lower AIT vapor release speeds, since a highly dense shellac moiety is formed. In addition, greater ratios of AIT to shellac in the AIT-incorporating shellac, namely, greater charged AIT/shellac proportions when forming an AIT-incorporating shellac tend to result in higher AIT vapor release speeds, and smaller AIT/shellac proportions tend to result in lower AIT vapor release speeds and continuous release of AIT vapor.

The release speed of AIT vapor from the AIT controlled-release preparation of the present invention can be controlled to various desired modes by altering various conditions as mentioned above. Of these conditions, the concentration of the shellac to be dissolved in an organic solvent according to the solvent method is 30-60% by weight, preferably 40-60% by weight, as mentioned above, and the drying temperature is low, preferably about 80°C in consideration of the yield of AIT. In the molten method, the melting temperature is preferably not more than 100°C as mentioned above. Accordingly, the release speed of AIT vapor from the AIT controlled-release preparation of the present invention is preferably controlled by making these conditions same but changing the proportion of AIT relative to shellac in the AIT-incorporating shellac, namely, by changing the charged AIT/shellac proportion when forming an AIT-incorporating shellac. According to such method, various AIT controlled-release preparations having various AIT vapor release speeds over a wide range, can be formed with ease and with good reproducibility.

The speed and amount of the AIT vapor to be released are appropriately determined in consideration of the desired time of retention of the action and the concentration of the AIT vapor in the system in which the preparation is to be used (system to be treated).

The AIT controlled-release preparation of the present invention can be used for antimicrobial effect, insectproof effect, freshness retention, antiseptic or preservative effect and so on. That is, the AIT controlled-release preparation of the present invention has bacteriocidal, bacteriostatic, and mold-preventive actions against aerobic bacteria and anaerobic bacteria, as well as moldcidal, moldstatic and mold-preventive action, and is useful as an antimicrobial agent for foods and various articles in which growth and proliferation of deleterious microorganisms pose problems. In addition, the AIT controlled-release preparation of the present invention has a preventive action against putrefaction and fermentation of foods and degradation of freshness, and is useful as a preservative effective for freshness retention and prevention of putrefaction of foodstuffs, as well as a preservative for leather products, books and art objects (particularly antique). Moreover, the AIT controlled-release preparation of the present invention has an action of killing and avoiding harmful insects and is useful as an insectproof agent for building materials, agricultural products and clothings.

The microorganisms to be treated with the antimicrobial agent include, for example, fungi such as mold and yeast, bacteria such as *Staphylococcus*, *Escherichia coli*, *Salmonella typhi, Vibrio* and the like, spore, algae and other deleterious microorganisms.

The objects to be treated with the AIT controlled-release preparation of the present invention include, for example, various articles facing problems caused by growth and reproduction of deleterious microorganisms, such as processed livestock products, processed marine products, and agricultural products, cooked foods, processed foods, diet, packaging materials, building materials, agricultural products, fresh flowers and marine products wherein degradation of freshness is questioned, and building materials, agricultural products, food materials and clothings wherein damages by injurious insects are questioned.

According to the AIT controlled-release preparation of the present invention, the release speed of AIT vapor can be easily controlled by selecting the method for forming an AIT-incorporating shellac, the mixing proportion of AIT relative to shellac, and the like, which in turn enables, for example, sustained release of AIT vapor over an extended period. In addition, the AIT-incorporating shellac moiety of said preparation can be processed into various forms with ease, and various forms of AIT controlled-release preparation can be provided.

According to the AIT controlled-release preparation of the present invention, moreover, AIT vapor can be released in only the amount needed in the system in which the preparation is used. Hence, the preparation is extremely practical in that an antimicrobial action, insectproof action, freshness-retaining action or preservative action can be effectively exerted for a long time with a small amount of AIT, while minimizing the environmental pollution and damages to the objects of the treatment caused by the AIT vapor. Furthermore, the AIT controlled-release preparation of the present invention is beneficial, since, unlike CD inclusion compounds, it is seldom influenced by humidity.

The shellac to be used in the present invention is a natural resin which is conventionally used widely and safely in the fields of foods and pharmaceuticals, and the AIT controlled-release preparation of the present invention can be used appropriately for food uses. The shellac is biodegradable and causes less environmental problems. It is dissolved in alcohol at high concentrations, enabling drying at lower temperatures, and the amount of the alcohol to be evaporated is small, advantageously resulting in high yield of AIT when producing an AIT-incorporating shellac. The shellac is melted at low temperatures and easily fluidized by the addition of AIT, thus permitting provision of a liquid of AIT-incorporating shellac at low temperatures. This in turn leads to the suppression of volatilization and alteration of AIT, and easy forming of an AIT-incorporating shellac having greater AIT contents, as a result of which the application range can be expanded. A thermoset shellac is insoluble in water and organic solvents inclusive of alcohols, and has a high softening temperature. Therefore, the shellac can make the AIT controlled-release preparation of the present invention extremely stable.

The present invention is explained by way of Examples, Comparative Examples and Experimental Examples.

Note that the mixing ratio of AIT and shellac in the AIT controlled-release preparations formed in respective Examples is expressed per $m^2$ area of sheet, film, paper or nonwoven fabric, per 10 cc of powdery or granular substance, or per ten 1 $cm^3$ blocks in the case of block (AIT release area being 60 $cm^2$), hereinafter mean values of 3 samples each are taken as standard values.

Example 1

Shellac (500 g, bleached Shellac, manufactured by Gifu Shellac, the same in the Examples to follow) and ethanol (400 g) were mixed to give a homogeneous solution. AIT (60 g) was cast therein and mixed to give a solution of AIT and shellac in ethanol. The charged AIT/shellac ratio was 12/100 (shellac being about 8.33 parts by weight when converted to the amount per part by weight of AIT). This solution was coated on a 20 $\mu$m-thick polypropylene film using a Meyer bar, and dried with hot air at 50°C for 5 minutes to form a film type AIT controlled-release preparation having an AIT-incorporating shellac layer on its surface.

The composition of the AIT-incorporating shellac layer of the AIT controlled-release preparation is shellac being 10.2 $g/m^2$ and AIT being 0.7 $g/m^2$, namely, shellac being about 14.6 parts by weight per part by weight of AIT. The yield of AIT was 57%.

Example 2

Shellac (500 g) and ethanol (400 g) were mixed to give a homogeneous solution. AIT (30 g) was cast therein and mixed to give a solution of AIT and shellac in ethanol. The charged AIT/shellac proportion was 6% (shellac being about 17 parts by weight when converted to the amount per part by weight of AIT). The obtained solution was coated on a 20 $\mu$m-thick polypropylene film using a Meyer bar, and dried with hot air at 50°C for 5 minutes to form a film type AIT controlled-release preparation having an AIT-incorporating shellac layer on its surface.

The composition of the AIT-incorporating shellac layer of the AIT controlled-release preparation was shellac being 9.5 g/m$^2$ and AIT being 0.27 g/m$^2$, namely, shellac being about 35 parts by weight per part by weight of AIT. The yield of AIT was 47%.

Example 3

In the same manner as in Example 1 except that 1,000 g of shellac, 670 g of ethanol and 2.2 g of AIT were used, a film type AIT controlled-release preparation having an AIT-incorporating shellac layer on its surface was formed.

The composition of the AIT-incorporating shellac layer of the AIT controlled-release preparation was shellac being 27 g/m$^2$ and AIT being 0.03 g/m$^2$, namely, shellac being about 900 parts by weight per part by weight of AIT.

Example 4

In the same manner as in Example 1 except that 100 g of shellac, 100 g of ethanol and 160 g of AIT were used, a film type AIT controlled-release preparation having an AIT-incorporating shellac layer on its surface was formed.

The composition of the AIT-incorporating shellac layer of the AIT controlled-release preparation was shellac being 3.52 g/m$^2$ and AIT being 2.2 g/m$^2$, namely, shellac being about 1.6 parts by weight per part by weight of AIT.

The AIT controlled-release preparations formed in the above-mentioned Examples 1 to 4 can be suitably used as antimicrobial agents for the prevention of mold and insect in closet and wardrobe, prevention of mold in shoes and prevention of bacteria on and putrefaction of foodstuffs, as preservatives and insecticides, or as freshness-retaining agents for flower, fruit, vegetable and the like, as film or sheet type preparations.

Example 5

A thermally bonded polypropylene nonwoven fabric weighing 40 g/m$^2$ was impregnated, using a mangle, with a solution of AIT and shellac in ethanol as prepared in Example 1, and dried with hot air at 50°C for 5 minutes to give an AIT controlled-release preparation having an AIT-incorporating shellac layer.

The composition of the AIT-incorporating shellac layer of said preparation was shellac being 7.5 g/m$^2$ and AIT being 0.5 g/m$^2$, namely, shellac being about 15 parts by weight per part by weight of AIT. The yield of AIT was 56%.

Example 6

A thermally bonded polypropylene nonwoven fabric weighing 40 g/m$^2$ was impregnated with a solution of AIT and shellac in ethanol as prepared in Example 2, with the use of a mangle, and dried with hot air at 50°C for 5 minutes to give an AIT controlled-release preparation having an AIT-incorporating shellac layer.

The composition of the AIT-incorporating shellac layer of said preparation was shellac being 7.7 g/m$^2$ and AIT being 0.23 g/m$^2$, namely, shellac being about 33.5 parts by weight per part by weight of AIT. The yield of AIT was 49%.

Example 7

In the same manner as in Example 5 except that 1,000 g of shellac, 700 g of ethanol and 2.2 g of AIT were used, an AIT controlled-release preparation having an AIT-incorporating shellac layer was formed.

The composition of the AIT-incorporating shellac layer of said preparation was shellac being 31.35 $g/m^2$ and AIT being 0.033 $g/m^2$, namely, shellac being about 950 parts by weight per part by weight of AIT.

Example 8

In the same manner as in Example 5 except that 100 g of shellac, 100 g of ethanol and 175 g of AIT were used, an AIT controlled-release preparation having an AIT-incorporating shellac layer was formed.

The composition of the AIT-incorporating shellac layer of said preparation was shellac being 3.13 $g/m^2$ and AIT being 2.5 $g/m^2$, namely, shellac being about 1.25 parts by weight per part by weight of AIT.

The preparations formed in the above-mentioned Examples 5 to 8 can be suitably used as antimicrobial agents for the prevention of mold and insect in closet and wardrobe, prevention of mold in shoes and prevention of bacteria on and putrefaction of foodstuffs, as preservatives and insectproof agents, or freshness-retaining agents for flower, fruit, vegetable and the like, as nonwoven fabric, paper, film or sheet type preparations.

Example 9

Shellac (100 g) was heated at 100°C in a kneader to soften and melt same, and AIT (30 g) was cast in and mixed. The charged AIT/shellac proportion was 30% (shellac being about 3.3 parts by weight when converted to the amount per part by weight of AIT). Then, heating was stopped and the mixture was left standing for one day for cooling to give a block AIT-incorporating shellac. The shellac was pulverized in a pulverizer to give granular AIT controlled-release preparation having a particle size of 0.5-1 m/m.

The composition of the AIT-incorporating shellac of said preparation was shellac being 85 parts and AIT being 15 parts (shellac being about 2.55 g/10 cc and AIT being 0.45 g/10 cc), namely, shellac being about 5.7 parts by weight per part by weight of AIT. The yield of AIT was 60%.

Example 10

In the same manner as in Example 9 except that 15 g of AIT was used relative to 100 g of shellac, a granular AIT controlled-release preparation having a particle size of 0.5-1 m/m was formed. The charged AIT/shellac ratio of the soft molten mixture of AIT and shellac was 15/100 (shellac being about 6.7 parts by weight when converted to the amount per part by weight of AIT). The composition of the AIT-incorporating shellac of the preparation obtained was shellac being 91 parts and AIT being 9 parts (shellac being about 2.73 g/10 cc and AIT being 0.27 g/10 cc), namely, shellac being about 10 parts by weight per part by weight of AIT. The yield of AIT was 66%.

Example 11

In the same manner as in Example 9 except that 300 g of shellac and 0.4 g of AIT were used, a granular AIT controlled-release preparation having a particle size of 0.5-1 m/m was formed. The composition of the AIT-incorporating shellac of the preparation obtained was shellac being 3 g/10 cc and AIT being 0.003 g/10 cc, namely, shellac being 1,000 parts by weight per part by weight of AIT.

Example 12

In the same manner as in Example 9 except that 50 g of shellac and 65 g of AIT were used, a granular AIT controlled-release preparation having a particle size of 0.5-1 m/m was formed. The composition of the AIT-incorporating shellac of the preparation obtained was shellac being 1.62 g/10 cc and AIT being 1.54 g/10 cc, namely, shellac being about 1.1 parts by weight per part by weight of AIT.

Example 13

Shellac (300 g) was heated in a kneader at 80°C to soften and melt same, and AIT (75 g) was cast in and mixed. The charged AIT/shellac proportion was 25% (shellac being 4 parts by weight when converted to the amount per part by weight of AIT). Then, heating was stopped and the mixture was left standing at room temperature for one day for cooling to give a block AIT-incorporating shellac. The shellac was pulverized in a pulverizer to give a granular AIT controlled-release preparation having a particle size of 0.5-1 m/m. The composition of the AIT-incorporating shellac of said preparation was shellac being 2.56 g/10 cc and AIT being 0.44 g/10 cc, namely, shellac being about 6 parts by weight per part by weight of AIT.

Example 14

In the same manner as in Example 13 except that 300 g of shellac and 0.4 g of AIT were used, a granular AIT controlled-release preparation having a particle size of 0.5-1 m/m was formed. The composition of the AIT-incorporating shellac of the preparation obtained was shellac being 2.72 g/10 cc and AIT being 0.003 g/10 cc, namely, shellac being about 907 parts by weight per part by weight of AIT.

Example 15

In the same manner as in Example 13 except that 50 g of shellac and 65 g of AIT were used, a granular AIT controlled-release preparation having a particle size of 0.5-1 m/m was formed. The composition of the AIT-incorporating shellac of the preparation obtained was shellac being 1.51 g/10 cc and AIT being 1.49 g/10 cc, namely, shellac being about 1.01 parts by weight per part by weight of AIT.

The AIT controlled-release preparations of Examples 9 - 15 can be suitably used as antimicrobial agents, insectproof agents, freshness-retaining agents, antiseptics or preservatives prepared by mixing same as a granular material or upon pulverizing into a powdery form, with paint, adhesive, resin and the like.

Example 16

Shellac (100 g) was soften-melted by heating at 100°C in a kneader, and AIT (30 g) carried by 60 g of A type zeolite particles (manufactured by TOSO, average particle size 10 μ, hereinafter the same) was cast in and mixed. The heating was stopped, and the mixture was left standing at room temperature for one day for cooling to give a block AIT-incorporating shellac. The shellac was pulverized in a pulverizer to give a granular AIT controlled-release preparation having a particle size of 0.5-1 m/m. The composition of the AIT-incorporating shellac of said preparation was shellac being 1.95 g/10 cc, AIT being 0.38 g/10 cc and zeolite being 1.17 g/10 cc, namely, shellac being about 5.1 parts by weight per part by weight of AIT.

Example 17

A low density polyethylene resin (100 g, Sumikasen L402, manufactured by Sumitomo Chemical Company, Ltd.) for extrusion laminating was heat-melted at 250°C in a kneader, and a granular AIT controlled-release preparation (40 g) prepared in Example 13 was cast in and quickly mixed. The mixture was dropped into a melter of a hot melt labocoater CL2016 (manufactured by Meltex) and immediately thereafter hot melt-coated on a thermally bonded type polypropylene nonwoven fabric weighing 40 g/m² by said coater. The AIT content of the obtained nonwoven fabric was 0.55 g/m².

Example 18

Shellac (300 g) was soften-melted by heating at 80°C in a kneader, and AIT (6.5 g) was cast in and mixed. The charged AIT/shellac proportion was about 2.2% (shellac being about 46 parts by weight when converted to the amount per part by weight of AIT). Then, heating was stopped and the mixture was left standing at room temperature for one day for cooling to give a block AIT-incorporating shellac. The shellac was cut into 1 cm³ pieces with a knife to give AIT controlled-release preparations. The mixing proportion of the shellac and AIT per 10 said preparations was shellac being 11 g/10 pieces and AIT being 0.22 g/10 pieces, namely, shellac being 50 parts by weight per part by weight of AIT.

Example 19

In the same manner as in Example 18 except that 0.33 g of AIT was used, 1 cm³ block AIT controlled-release preparations were formed. The content proportion of the shellac and AIT per 10 said preparations was shellac being 9.5 g/10 pieces and AIT being 0.01 g/10 pieces, namely, shellac being 950 parts by weight per part by weight of AIT.

Example 20

Shellac (50 g) was soften-melted by heating at 100 °C in a kneader, and AIT (50 g) was cast in and mixed. The charged AIT/shellac proportion was 100% (shellac being about 1 part by weight when converted to the amount per part by weight of AIT). Then, heating was stopped and the mixture was left standing at room temperature for one day for cooling to give a block AIT-incorporating shellac. The shellac was cut into 1 cm$^3$ pieces with a knife to give AIT controlled-release preparations. The mixing proportion of the shellac and AIT per 10 said preparations was shellac being 5.54 g/10 pieces and AIT being 5.1 g/10 pieces, namely, shellac being about 1.09 parts by weight per part by weight of AIT.

Comparative Example 1

Polyvinylidene chloride (300 g, hereinafter referred to as PVDC, trademark Saran Resin F216, manufactured by Asahi Chemical Industry Co., Ltd.) and tetrahydrofuran (THF, 400 g) were mixed, and AIT (40 g) was cast therein to give a solution of AIT and PVDC in THF. The charged AIT/PVDC ratio was 13/100 (PVDC being about 7.7 parts by weight when converted to the amount per part by weight of AIT). Thereafter, the solution was treated in the same manner as in Example 1 except that the hot air drying was performed at 100 °C for 3 minutes to give a film type AIT-containing preparation having an AIT/PVDC layer on the polypropylene film surface. The composition of the coating layer was PVDC being 8.3 g/m$^2$ and AIT being 0.02 g/m$^2$, namely, PVDC being about 415 parts by weight per part by weight of AIT. The yield of AIT was about 2%.

Comparative Example 2

In the same manner as in Comparative Example 1 except that 20 g of AIT was mixed, a film type AIT-containing preparation having an AIT-incorporating PVDC layer on the surface of a polypropylene film was formed. The charged AIT/PVDC ratio of the solution of AIT and PVDC in THF was 6.7/100 (PVDC being about 15 parts by weight when converted to the amount per part by weight of AIT). The composition of the coating layer was PVDC being 7.6 g/m$^2$ and AIT being 0.03 g/m$^2$, namely, PVDC being about 253 parts by weight per part by weight of AIT. The yield of AIT was about 3%.

Comparative Example 3

In the same manner as in Comparative Example 1 except that 500 g of AIT was mixed, a film type AIT-containing preparation having an AIT-incorporating PVDC layer on the surface of a polypropylene film was formed. The composition of the coating layer was PVDC being 8.5 g/m$^2$ and AIT being 0.21 g/m$^2$, namely, PVDC being about 40 parts by weight per part by weight of AIT.

Comparative Example 4

A type zeolite particles (950 g) and AIT (50 g) were placed in a kneader and mixed at room temperature to give zeolite particles carrying AIT. The AIT content of said particles was 0.15 g/10 cc.

Comparative Example 5

A type zeolite particles (50 g) and AIT (50 g) were placed in a kneader and mixed at room temperature to give zeolite particles carrying AIT. The AIT content of said particles was 1.05 g/10 cc.

Experimental Example 1 : AIT release test (1)

The AIT controlled-release preparations (20 cm×30 cm) prepared in Examples 1, 2, 5 and 6 were left standing by three pieces from respective Examples under thermo-hygrostatic conditions of 20 °C and 65% RH. After the lapse of certain days, 10 cm×10 cm pieces were cut out from each sample. The AIT contained in the sample pieces was extracted with ethanol, residual AIT amount was calculated by gas chromatography analysis, and the average value (n = 3) of respective samples was obtained.

With regard to the AIT controlled-release preparations prepared in Examples 9 and 10, 1 g each was left standing and at every predetermined number of days, 0.05 g each was taken out. The AIT was extracted with ethanol, residual AIT amount was calculated by gas chromatography, and the average value

13

(n = 3) of respective samples was obtained. With regard to the AIT-containing preparations prepared in Comparative Examples 1 and 2, 10 pieces each of the samples were left standing and at every predetermined number of days, 10 cm ×10 cm pieces were cut out from each of the five pieces out from the ten sample pieces respectively. Five pieces were extracted together with ethanol to determine the AIT content. The remaining five pieces were treated in the same manner and the average value of the two determinations was taken as the residual AIT content. The results are shown in Fig. 1.

Experimental Example 2 : AIT release test (2)

The AIT controlled-release preparations prepared in Examples 1 to 20 and Comparative Examples 1 and 3-5 were left standing in a thermo-hygrostat of 25°C and 70% RH. A predetermined number of samples were taken at every predetermined number of days. The AIT contained in the samples was extracted with ethanol, residual AIT amount was calculated by gas chromatography analysis, and the average value (n = 3) was obtained, respectively. The amount of AIT release per day of each preparation (standard amount) is shown in Tables 1 and 2 as AIT release speed, which was calculated from the released amount in 10 days from predetermined number of respective preparations. When the samples to be left standing were film or nonwoven fabric, twenty 20×30 cm pieces were left hanging, and when the samples were granular, about 200 cc thereof was spread on a plastic vat and left standing.

Table 1

| Ex. No. | Preparation type | AIT amount per standard amount | Shellac amount per standard amount | Shellac amount per part by weight of AIT | AIT release speed (day, released amount per standard amount) |
|---|---|---|---|---|---|
| 1 | Solvent method, film | 0.70 g/m² | 10.20 g/m² | 14.6 parts/wt | 0.028 g/m²/day |
| 2 | ″ | 0.27 | 9.5 | 35.2 | 0.011 |
| 3 | ″ | 0.03 | 27.00 | 900.0 | 0.0005 |
| 4 | ″ | 2.20 | 3.52 | 1.6 | 0.10 |
| 5 | Solvent method, non-woven fabric | 0.50 g/m² | 7.50 g/m² | 15.0 parts/wt | 0.038 g/m²/day |
| 6 | ″ | 0.23 | 7.7 | 33.5 | 0.012 |
| 7 | ″ | 0.033 | 31.35 | 950.0 | 0.0006 |
| 8 | ″ | 2.50 | 3.13 | 1.25 | 0.15 |
| 9 | Molten method, granules (100℃) | 0.45 g/ 10 cc | 2.55 g/ 10 cc | 5.7 parts/wt | 0.028 g/ 10 cc/day |

Table 1 -continued

| Ex. No. | Preparation type | AIT amount per standard amount | Shellac amount per standard amount | Shellac amount per part by weight of AIT | AIT release speed (day, released amount per standard amount) |
|---|---|---|---|---|---|
| 10 | " | 0.27 | 2.73 | 10.0 | 0.019 |
| 11 | " | 0.003 | 3.00 | 1000.0 | $8 \times 10^{-5}$ |
| 12 | " | 1.54 | 1.62 | 1.1 | 0.12 |
| 13 | Molten method, granules (80°C) | 0.44 g/ 10 cc | 2.56 g/ 10 cc | 5.8 parts/wt | 0.019 g/ 10 cc/day |
| 14 | " | 0.003 | 2.72 | 906.7 | $6 \times 10^{-5}$ |
| 15 | " | 1.49 | 1.51 | 1.0 | 0.10 |
| 16 | Molten method (100°C) carried by carrier in granules | 0.38 g/ 10 cc | 1.95 g/ 10 cc | 5.1 parts/wt | 0.04 g/ 10 cc/day |
| 17 | PE-coated granules of Example 13 | 0.55 g/m² | | | 0.045 g/ m²/day |
| 18 | Molten method, block (80°C) | 0.22 g/ 10 pieces | 11.0 g/ 10 pieces | 50 parts/wt | 0.001 g/10 pieces/day |
| 19 | " | 0.01 | 9.5 | 950 | $3 \times 10^{-4}$ |
| 20 | Molten method, block (100°C) | 5.1 | 5.54 | 1.09 | 0.16 |

Table 2

| Com. Ex. No. | Preparation type | AIT content | PVDC content | AIT/PVDC | AIT release speed (day, released amount per standard amount) |
|---|---|---|---|---|---|
| 1 | PVDC coated | 0.02 g/m² | 8.3 g/m² | 415 | $2\times10^{-6}$ g/m²/day |
| 3 | ″ | 0.21 g/m² | 8.5 | 40 | $2.6\times10^{-6}$ g/m²/day |
| 4 | carried by zeolite | 0.15 g/10 cc | | | 0.4 g/10 cc/day |
| 5 | ″ | 1.05 g/10 cc | | | 0.6 g/10 cc/day |

An AIT release test was done with respect to the preparations (Examples 2, 6, 10, 13 and 18, and Comparative Examples 3 and 4) containing AIT in almost the same amount per the base amount of the preparations, and the residual proportion (%) of AIT amount which varied with increasing number of days lapsed was compared in Fig. 2.

As is evident from these results, the AIT controlled-release preparation of the present invention can control the release speed of AIT, and AIT can be sustainedly and stably release/supplied in necessary amounts according to the desired use.

Experimental Example 3 : Effect of AIT controlled-release preparation as antimicrobial agent

The AIT controlled-release film preparation of Example 1 was cut, so that AIT was contained in a total amount of 6 mg, and prepared into an antimicrobial agent. A dish containing a desoxycholate agar medium was prepared and a dilute solution of *Escherichia coli* was applied to the surface of the medium and used as a test material.

The test material (dish) was placed in a lunch box and the antimicrobial agent was placed on said dish. The lunch box was lidded and cultured at 25°C for 24 hours.

As a control, the same test was done using a test material without an antimicrobial agent. The results obtained 24 hours after the culture are shown in the following table.

| Test material | Colony formation |
|---|---|
| AIT controlled-release preparation of Example 1 | Colony formation not found |
| Control | Red colony formed |

Experimental Example 4 : Effect of AIT controlled-release preparation as mold-preventive agent

① *Tatami* undersheet

The AIT controlled-release preparation (nonwoven fabric) prepared in Example 6 was placed in between a *tatami* (20 cm×20 cm large, a folkcraft of Okayama) and a plywood, and left standing at a high temperature and under a high humidity. As a control, an untreated nonwoven fabric was inserted in between a *tatami* and a plywood. Three months and six months later, the development of mold was examined.

| Test material | 3 months | 6 months |
|---|---|---|
| AIT controlled-release preparation of Example | - | - |
| Control | + (only one site) | + + (entirety) |
| -: occurrence of mold not found  + : occurrence of mold  + + : intense occurrence of mold | | |

② Mold-preventive sheet for kitchen

Presuming a kitchen sink, two boxes (50×50×50 cm) were prepared using a plywood. A sheet of the AIT controlled-release preparation prepared in Example 5, which was placed on the bottom, and, as a control, an unprocessed nonwoven fabric were used. Dishes wherein mold was applied to the surface of PDA medium were adhered to the bottom, the side and the top plate, and preserved at room temperature (about 25°C) and under high humidity (about 95%). The growth of the mold was observed every week for up to 2 months at the longest.

18

| | 1 W | 2 W | 3 W | 4 W | 5 W | 6 W | 7 W | 8 W |
|---|---|---|---|---|---|---|---|---|
| AIT controlled-release preparation | - | - | - | - | - | - | - | - |
| Control | - | ± | + | + | + + | + + | | |

-: occurrence of mold not found  ±: slight mold growth  +: formation of clear colony  + +: intense growth

The control was not observed after week 6.

③ Kneading with paint

The granular AIT controlled-release preparation prepared in Example 15 was mixed with an acrylic aqueous paint in a proportion of 1% and used as a test sample. The sample was evaluated according to mold resistance test (JIS Z 2911). As a control, a non-added paint was used.

| Sample | Observation results |
|---|---|
| AIT controlled-release preparation | No mold found around the sample |
| Untreated | Mold found in the entirety of medium and sample |

Experimental Example 4 : Effect of AIT controlled-release preparation as insecticide

Ten *Dermatophagoides pteronyssinus* were placed in a dish, and the dish was lidded with an air permeable nonwoven fabric. Said dish and the granular AIT controlled-release preparation (1 g) prepared in Example 16, which was packaged with a nonwoven fabric, were placed in an about 20 ℓ desiccator. As a control, a dish containing *Dermatophagoides pteronyssinus* alone was placed in a desiccator. The survival of the respective *Dermatophagoides pteronyssinus* was observed 24 hours later.

| Sample | Observation results |
|---|---|
| Treated with AIT preparation | 2 out of 10 were alive in a feeble state |
| Untreated | all 10 mites were vigorously active |

Experimental Example 5 : Effect of AIT controlled-release preparation as freshness-retaining agents

Two cases of strawberries (30 strawberries packed in each case) were prepared and one of them was wrapped whole with the case with a film type AIT controlled-release preparation prepared in Example 1, and the other was wrapped with an untreated polypropylene film. These were preserved at about 20 °C and changes in strawberries were observed. The results are shown in the following table.

| | 3 days later | 5 days later | 7 days later |
|---|---|---|---|
| AIT preparation film | no change | no change | no change |
| Untreated | calyx turned slight brown | entire calyx turned brown | berry itself softened |

**Claims**

1.  An allyl isothiocyanate controlled-release preparation comprising an allyl isothiocyanate and a shellac, the shellac acting as a barrier against the release of the allyl isothiocyanate.

2.  An allyl isothiocyanate controlled-release preparation comprising a shellac incorporating an allyl isothiocyanate.

3. The allyl isothiocyanate controlled-release preparation of Claim 2, wherein the content of the allyl isothiocyanate to the shellac is 1-1000 parts by weight of shellac per part by weight of the allyl isothiocyanate.

4. The allyl isothiocyanate controlled-release preparation of Claim 2 or Claim 3, wherein the shellac incorporating an allyl isothiocyanate is formed via a step of mixing an allyl isothiocyanate with a shellac melted at a temperature of not more than 100°C.

5. The allyl isothiocyanate controlled-release preparation of any one of Claims 2 to 4, wherein the shellac incorporating an ally] isothiocyanate is in the form of a plate, a block, a powder or a granule.

6. The allyl isothiocyanate controlled-release preparation of any one of Claims 2 to 4, wherein the shellac incorporating an allyl isothiocyanate is adhered to a base material.

7. The allyl isothiocyanate controlled-release preparation of any one of Claims 2 to 4, wherein the shellac incorporating an allyl isothiocyanate is mixed with a base material.

8. The allyl isothiocyanate controlled-release preparation of Claim 6 or 7, wherein the base material is selected from the group consisting of plastic plates inclusive of film and plate, paper, nonwoven fabric and woven fabric.

9. The allyl isothiocyanate controlled-release preparation of any one of Claims 2 to 8, wherein the allyl isothiocyanate in the shellac incorporating an allyl isothiocyanate is carried by a carrier.

10. The allyl isothiocyanate controlled-release preparation of any one of Claims 1 to 9, wherein the allyl isothiocyanate controlled-release preparation is used for the purpose of antimicrobial action, insectproof action, prevention of putrefaction, freshness retention or preservation.

11. A method for producing the allyl isothiocyanate controlled-release preparation of Claim 1 or Claim 2, comprising melting a shellac at a temperature of not more than 100°C and adding an allyl isothiocyanate thereto.

F I G. 1

Days lapsed (day)

Proportion of residual AIT (%)

# F I G. 2

EP 0 687 412 A1

# INTERNATIONAL SEARCH REPORT

International application No.

PCT/JP94/02299

## A. CLASSIFICATION OF SUBJECT MATTER

Int. Cl$^6$ A01N47/48

According to International Patent Classification (IPC) or to both national classification and IPC

## B. FIELDS SEARCHED

Minimum documentation searched (classification system followed by classification symbols)

Int. Cl$^6$ A01N47/48

Documentation searched other than minimum documentation to the extent that such documents are included in the fields searched

Electronic data base consulted during the international search (name of data base and, where practicable, search terms used)

CAS ONLINE

## C. DOCUMENTS CONSIDERED TO BE RELEVANT

| Category* | Citation of document, with indication, where appropriate, of the relevant passages | Relevant to claim No. |
|---|---|---|
| Y | JP, A, 3-200570 (Minato Sangyo K.K.), September 2, 1991 (02. 09. 91), Full descriptions & WO, A, 91/7093 & JP, A, 3-151864 & JP, A, 3-151972 & JP, A, 151975 & JP, A, 3-152273 & JP, A, 3-153607 & JP, A, 3-154688 & JP, A, 3-187370 & JP, A, 3-219857 & JP, A, 219846 & AU, A, 9066359 & EP, A, 452512 & CN, A, 1054347 & NZ, A, 236018 & AU, A, 9456422 | 1 - 11 |
| Y | JP, A, 5-58805 (The Green Cross Corp.), March 9, 1993 (09. 03. 93), Full descriptions (Family: none) | 1 - 11 |
| Y | JP, A, 4-41438 (Shinichi Cho), February 12, 1992 (12. 02. 92), Full descriptions (Family: none) | 1 - 11 |
| E,Y | JP, A, 7-41402 (Sumitomo Chemical Co., Ltd.), February 10, 1995 (10. 02. 95), | 1 - 11 |

| [X] Further documents are listed in the continuation of Box C. | [ ] See patent family annex. |
|---|---|

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| April 10, 1995 (10. 04. 95) | May 2, 1995 (02. 05. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)

C (Continuation).  DOCUMENTS CONSIDERED TO BE RELEVANT

| Category* | Citation of document, with indication, where appropriate, of the relevant passages | Relevant to claim No. |
|---|---|---|
| | Full descriptions<br>& EP, A, 582823 & AU, A, 9341589<br>& CA, A, 2098889 | |
| Y | JP, A, 2-188507 (Imperial Chemical Industries PLC.),<br>July 24, 1990 (24. 07. 90),<br>Full descriptions<br>& EP, A, 369613 & AU, A, 8944310<br>& BR, A, 8905843 & DK, A, 8905702<br>& CN, A, 1042639 | 1 - 11 |
| Y | JP, A, 2-289186 (Imperial Chemical Industries PLC.),<br>November 29, 1990 (29. 11. 90),<br>Full descriptions<br>& EP, A, 382382 & GB, A, 2228200<br>& AU, A, 9048960 & BR, A, 9000581<br>& ZA, A, 8900684 | 1 - 11 |
| Y | JP, A, 56-86108 (Tsukiboshi Kasai K.K.),<br>July 13, 1981 (13. 07. 81),<br>Full descriptions<br>(Family: none) | 1 - 11 |
| Y | JP, A, 56-118480 (Asahi Denka Kogyo K.K.),<br>September 17, 1981 (17. 09. 81),<br>Full descriptions<br>(Family: none) | 1 - 11 |
| Y | JP, A, 62-56401 (Earth Chemical Co., Ltd.),<br>March 12, 1987 (12. 03. 87),<br>Full descriptions<br>(Family: none) | 1 - 11 |